# EUROPEAN PATENT APPLICATION

(11) **EP 2 675 178 A1**
(43) Date of publication of application: **18.12.2013**
(21) Application number: 13003008.3
(22) Date of filing: 12.06.2013
(51) Int. Cl.: H04N 21/236, H04L 29/06, H04N 21/2381, H04N 21/4363

(54) **Power optimization for sending static indications in video transmissions**

(30) Priority: 12.06.2012 US 201213494094
(71) Applicant: Broadcom Corporation, Irvine, CA 92617 (US)
(72) Inventor: Murat, Mese, Rancho Palos Verdes CA 90275 (US); Brima, Ibrahim, Laguna Hills CA 92653 (US)
(74) Representative: Jehle, Volker Armin

(57) **Abstract**

An exemplary embodiment includes receiving an encoded video signal containing coded moving macroblocks and static indications corresponding to non-moving macroblocks; and packetizing the encoded video signal for wireless transmission, wherein a series of consecutive static indications in the encoded video signal are grouped with a moving macroblock in a wireless packet.

## Description

### TECHNICAL FIELD

The present disclosure is generally related to video transmissions.

### BACKGROUND

Transmission of video over a wireless data network may involve a process of encoding video data, grouping the video data into video packets, and packetizing the video packets into wireless transmission packets, before eventually transmitting the wireless transmission packets. At a receiver, the reverse process is performed to recover the video data. However, overhead requirements during video packetization and wireless packetization might often cause a significant power burden on the system during transmission and subsequent processing.

### BRIEF SUMMARY OF THE INVENTION

According to an aspect, a method comprises:
receiving an encoded video signal containing coded moving macroblocks and static indications corresponding to non-moving macroblocks; and
packetizing the encoded video signal for wireless transmission, wherein a series of consecutive static indications in the encoded video signal are grouped with a moving macroblock in a single wireless packet.

Advantageously, the series of consecutive static indications are grouped in the single wireless packet as individual static indications.

Advantageously, the series of consecutive static indications are grouped in the single wireless packet as a single static indication that identifies the non-moving macroblocks that are represented by the consecutive static indications in the encoded video signal.

Advantageously, the wireless transmission occurs in at least a 60 GHz frequency band.

Advantageously, the moving macroblock in the single wireless packet is positioned after the consecutive static indications in the encoded video signal.

Advantageously, during packetizing, a series of consecutive static indications at an end position of the encoded video signal are grouped without a moving macroblock in a second single wireless packet.

According to an aspect, a method comprises:
receiving a plurality of wireless packets; and
extracting payload from the wireless packets to form an encoded video signal, wherein contents of the wireless packets are reviewed for at least one static indication corresponding to non-moving macroblocks in a video stream being grouped with a moving macroblock, wherein the at least one static indication grouped with a moving macroblock is replaced with consecutive static indications in a position preceding the moving macroblock in the encoded video signal.

Advantageously, the method further comprises:
sending a single acknowledgment indicating successful receipt of the consecutive static indications.

Advantageously, the single acknowledgment additionally serves to indicate successful receipt of the moving macroblock.

Advantageously, the at least one static indication comprises a plurality of individual static indications.

Advantageously, the at least one static indication comprises a single static indication that identifies the non-moving macroblocks that are represented by the consecutive static indications in the encoded video signal.

Advantageously, the wireless packets are received via wireless transmissions occurring in at least a 60 GHz frequency band.

Advantageously, the contents of the wireless packets are additionally reviewed for at least one static indication at an end position of the video stream, wherein the at least one static indication is replaced with consecutive static indications in the end position when the at least one static indication corresponds to a plurality of non-moving macroblocks.

According to an aspect, a system comprises:
a video transcoder configured to output an encoded video signal containing coded moving macroblocks and static indications corresponding to non-moving macroblocks; and
radio circuitry configured to packetize the encoded video signal for wireless transmission, wherein a series of consecutive static indications in the encoded video signal are grouped with a moving macroblock in a single wireless packet.

Advantageously, the wireless transmission occurs in at least a 60 GHz frequency band.

Advantageously, the series of consecutive static indications are grouped in the single wireless packet as individual static indications.

Advantageously, the series of consecutive static indications are grouped in the single wireless packet as a single static indication that identifies the non-moving macroblocks that are represented by the consecutive static indications in the encoded video signal.

Advantageously, the radio circuitry further configured to receive a plurality of wireless packets; and extract a second encoded video signal from the plurality of wireless packets, wherein contents of the plurality of wireless packets are reviewed for at least one static indication, corresponding to non-moving macroblocks in the second encoded video signal, grouped with a moving macroblock, wherein the at least one static indication grouped with the moving macroblock is replaced with second consecutive static indications in a position preceding the moving macroblock in the second encoded video signal.

Advantageously, the radio circuitry further configured to send a single acknowledgment indicating successful receipt of the second consecutive static indications.

Advantageously, the moving macroblock in the single wireless packet is positioned after the consecutive static indications in the encoded video signal.

### BRIEF DESCRIPTION OF THE DRAWINGS

Many aspects of the present disclosure can be better understood with reference to the following drawings. The components in the drawings are not necessarily to scale, emphasis instead being placed upon clearly illustrating principles of the present disclosure. Moreover, in the drawings, like reference numerals designate corresponding parts throughout the several views.

FIG. 1 is a block diagram of one embodiment of a wireless communication system in accordance with the present disclosure.

FIG. 2 is a system diagram illustrating an embodiment of a wireless communication system in accordance with the present disclosure.

FIG. 3 is a system diagram illustrating another embodiment of a wireless communication system in accordance with the present disclosure.

FIG. 4 is a device diagram illustrating an embodiment of an interactive device that may be implemented to support the functionality in aggregating static indications with moving blocks in packets of a video stream in accordance with the present disclosure.

FIG. 5 is a device diagram illustrating another embodiment of an interactive that may be implemented to support the functionality in aggregating static indications with moving blocks in packets of a video stream in accordance with the present disclosure.

FIG. 6 is a diagram illustrating various schemes of transmitting video in accordance with embodiments of the present disclosure.

FIG. 7 shows a block diagram of an example electronic device featuring, according to an embodiment of the present disclosure.

FIGS. 8-10 are flowchart diagrams of methods of processing static indications according to various embodiment of the present disclosure.

FIGS. 11-14 are diagrams illustrating various schemes of packetizing video in accordance with embodiments of the present disclosure.

### DETAILED DESCRIPTION

This disclosure pertains to various embodiments, including systems, methods, computer useable mediums, and circuitry programmed to efficiently group static regions within encoded video data that is being transmitted over a transmission medium, such as a wireless network. In an illustrative and nonlimiting example, blocks or regions of a video frame may be static (e.g., may not be moving for a period of time) with respect to a previous block or frame. Accordingly, a video transmission system may take advantage of this behavior by sending an indication for each non-changing (static) region in the encoded video stream.

As an illustrative example, a user may establish a video conference, where the user is sharing his or her desktop screen with remote users. Accordingly, background parts of a video of the desktop screen may not be moving for extended periods of time from frame to frame. As discussed above, some video transmission systems take advantage of this behavior by sending a static indication for each non-changing (static) region in the screen.

However, if the encoded video stream is packetized for wireless transmission and the skip indications are sent in separate wireless packets, this can be a burden when there are many skip indications being sent within the encoded video stream. For example, sending the small packets of static indications over the air and then waiting for acknowledgements (ACK) from a receiver and subsequently processing the ACKs can be a power burden.

One way to reduce the power burden is to send a representation of the skip indications with a moving region coded data to increase the wireless transmission efficiency. In accordance with one embodiment, among others, of the present disclosure, the skip indication representation may be an indication of a number of skip indications that occur in a series before the moving region or block is reached in encoding the video data. As mentioned above, the skip indication representation may also be combined with the moving region data in its own wireless transmission packet.

Therefore, embodiments of the present disclosure provide for a set of static indications to be aggregated into a single static indication representation, and this static indication representation in turn may be aggregated with the next moving video block. This can greatly reduce the overhead of the ACK portion of a MAC (media access control) protocol using in wireless transmissions.

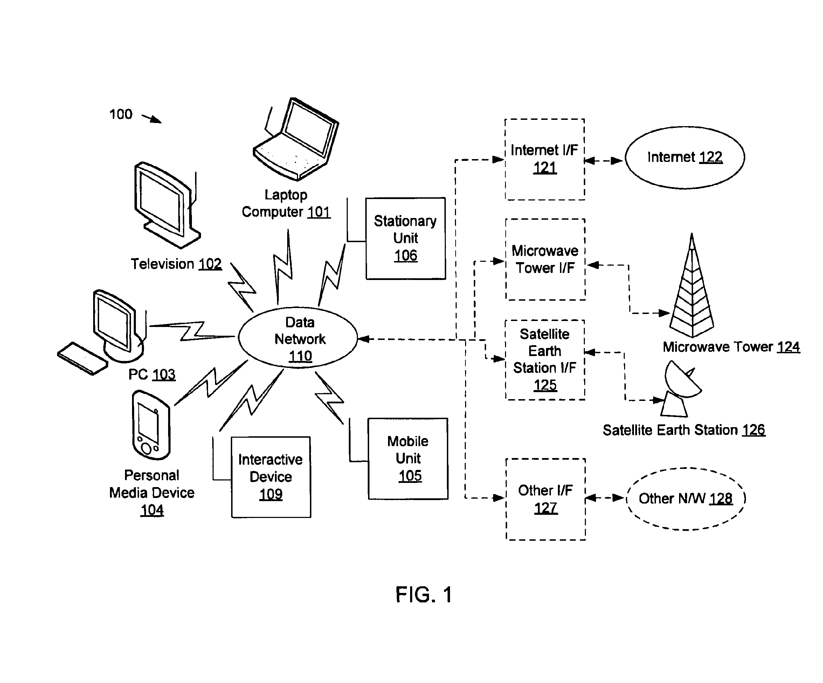

Referring to FIG. 1, a block diagram of one embodiment of a wireless communication system is depicted in accordance with the present disclosure. A communication system 100 includes a number of devices that are all operable to communicate with one another via a data network 110. For example, a number of devices that each include the functionality to interface with the data network 110 may include a laptop computer 101, a television 102, a personal computer (PC) 103, a personal media device 104 (that may be viewed as being a personal digital assistant (PDA), a personal electronic planner, tablet, or similar device), a mobile unit 105 (that may be viewed as being a telephone, a pager, or some other mobile data network operable device), and/or a stationary unit 106 (that may be viewed as a device that typically resides in a single location).

The group of devices 101-106 that may interact with the data network 110 is not intended to be an exhaustive list of device that may interact with a data network, and a generic device shown as an interactive device 109 represents a generic device that includes the functionality in order to interactive with the data network 110 and/or the other devices within the data network 110. Any of the devices 101-106 may be viewed generically as being the interactive device 109 without departing from the scope and spirit of the disclosure. Each of the devices 101-106 and the interactive device 109 may be viewed as being nodes of the data network 110. Any of the devices described above within the FIG. 1 may include the functionality to support aggregation of static indications with moving blocks in a video stream thereby providing efficiencies and improvements in the reliability and/or bandwidth of communication between the various devices within the data network 110.

It is also noted that the data network 110 itself includes functionality to allow interfacing with other networks as well. For example, the data network 110 may include an Internet interface 121 that allows for interfacing to the Internet 122. This Internet interface 121 may be viewed as being a base station device for the data network 110 that allows any one of the interactive devices to access the Internet 122.

It is also noted that the data network 110 may also include functionality to allow interfacing with other networks besides the Internet 122. For example, the data network 110 may include a microwave tower interface 123 that allows for interfacing to a microwave tower 124 thereby allowing communication with one or more microwave networks. Similar to the Internet interface 121, the microwave tower interface 123 may be viewed as being a base station device for the data network 110 that allows any one of the interactive devices to access the one or more microwave networks via the microwave tower 124.

Similarly, the data network 110 may include a satellite earth station interface 125 that allows for interfacing to a satellite earth station 126 thereby allowing communication with one or more satellite networks. The satellite earth station interface 125 may be viewed as being a base station device for the data network 110 that allows any one of the interactive devices to access the one or more satellite networks via the satellite earth station interface 125.

This finite listing of various network types that may interface to the data network 110 is not intended to be exhaustive. For example, any other network 128 may communicatively couple to the data network 110 via an interface 127 that includes the functionality for any one of the interactive devices to access the other network 128.

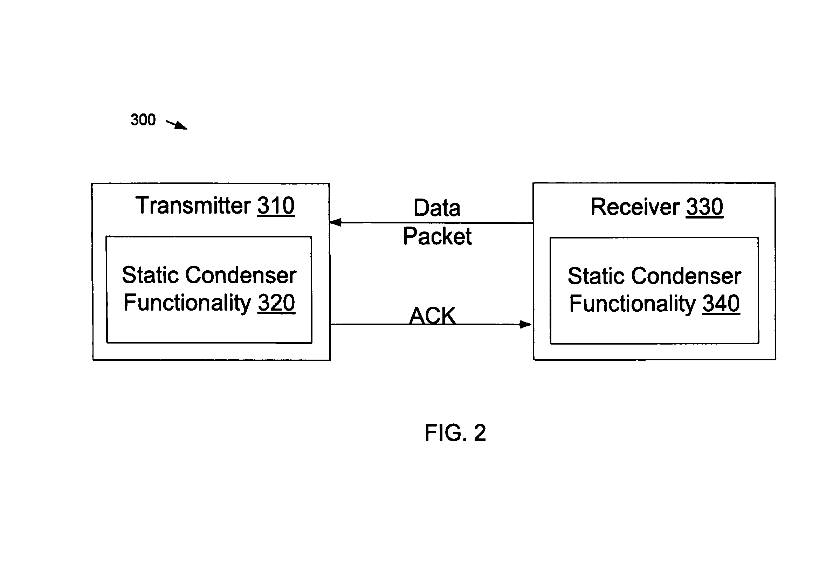

FIG. 2 is a system diagram illustrating an embodiment of a wireless communication system 300. A transmitter 310 is operable to support "static condenser" functionality 320 in aggregating static indications with moving blocks in packets of a video stream that is to be transmitted and to transmit the data packets to a receiver 330. The receiver 330 is operable to support static condenser functionality 340 in receiving the data packets and reconstitute the video stream using the aggregated static indications. The communication system 300 is a LAN (local area network) in certain embodiments; a WLAN in others, or alternatively, the communication system 300 may be a peer-to-peer (P2P) network. Embodiments may also be adaptable to wireline based LANs, as well as other communication networks.

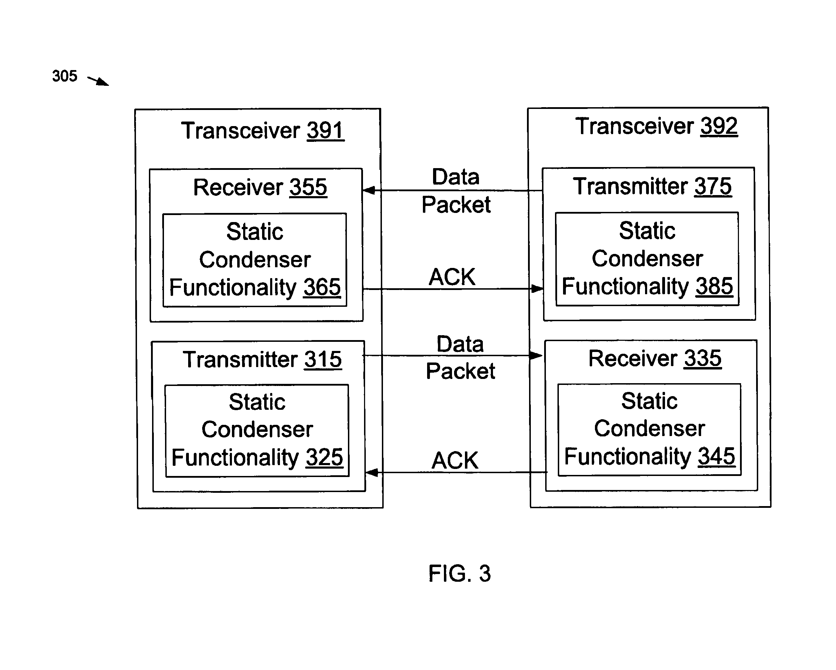

FIG. 3 is a system diagram illustrating another embodiment of a wireless communication system 305. Two transceivers, shown as a transceiver 391 and a transceiver 392, are operable to perform communication between one another. For example, the transceiver 391 is able to transmit a data packet to the transceiver 392, and vice versa. The functionality within the transceiver 391 and the transceiver 392 may be viewed as each including a transmitter and a receiver, or the functionality thereof. For example, the transceiver 391 includes a receiver 355 and a transmitter 315; the transceiver 392 includes a receiver 335 and a transmitter 375. The transmitter 375 is operable to communicate to the receiver 355. The transmitter 315 is operable to communicate to the receiver 335. The transmitter 375 is operable to transmit a data packet to the receiver 355, where the transmitter 375 supports static condenser functionality 385 in aggregating static indications with moving blocks in packets of a video stream that is to be transmitted. The receiver 355 is operable to receive the data packets and supports static condenser functionality 365 in reconstituting the video stream using the aggregated static indications. Correspondingly, transmitter 315 may also support static condenser functionality 325 in aggregating static indications with moving blocks in packets of a video stream that is to be transmitted, and receiver 335 may support static condenser functionality 345 in reconstituting the video stream using the aggregated static indications

FIG. 3 shows an embodiment where the functionality of aggregating static indications with moving blocks in packets of a video stream to provide the many benefits and advantages provided by the present disclosure, may be performed in the context of two transceivers within a communication system. The communication system 305 is a LAN in certain embodiments; alternatively, the communication system 305 may be a WLAN (wireless LAN) in others. Again, some embodiments of the present disclosure are also adaptable to wireline based LANs, as well as other communication networks.

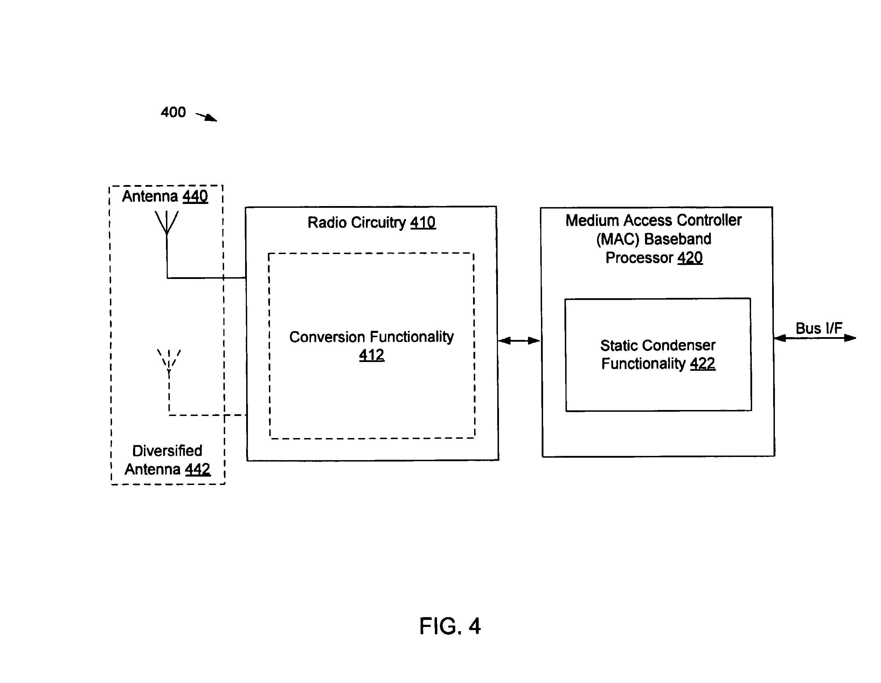

FIG. 4 is a device diagram illustrating an embodiment of an interactive device 400, 109 in accordance with the present disclosure. The interactive device 400 includes a radio circuitry 410 and a medium access controller (MAC)/baseband processor 420; the MAC functionality may be viewed as being designed into the baseband processor. The radio circuitry 410 is operable to receive a wireless signal via an antenna 440. The antenna 440 may be part of a diversified antenna 442 that includes one or more antennae. The MAC/baseband processor 420 is operable to communicate with other devices via a bus interface.

In various embodiments, both the circuitry 410 and a MAC/baseband processor 420 are Institute of Electrical and Electronic Engineers (IEEE) 802.11a/b/g/n-compliant chipsets that may be implemented in a digital composite metal oxide semiconductor (CMOS) process. This implementation involves one of the lowest possible silicon cost approaches to wireless radio and enables new product price points via chipset integration. The circuitry 410 and a MAC/baseband processor 420 are also compliant within a proposed draft of the 802.11ad standard in some embodiments, as well as the WiGig Alliance standards with WiGig Display Extension (WDE) support in some embodiments.

It is noted that the compatibility of the 802.11 n functionality is backward compatible and forward compatible with the previous and subsequent versions of 802.11. As an example, 802.11ad is a draft proposal for a next generation of the 802.11 standard; the functionality of the proposed 802.11ad standard will compatible with the proposed drafts of 802.11ad.

In certain embodiments, the MAC/baseband processor 420 involves a direct-conversion radio architecture that is shown in a functional block that is able to support conversion functionality 412 to transform a radio frequency (RF) signal received by the antenna to a baseband (BB) frequency for use in the MAC/baseband processor 420. If desired, this conversion functionality 412 may include radio frequency (RF) to baseband (BB) direct conversion functionality.

As mentioned above, the radio circuitry 410 may be implemented to support the RF to BB direct conversion functionality. The radio circuitry 410 may be viewed as being a direct-conversion CMOS integrated circuitry (IC). In one embodiment, the radio circuitry 410 may be located on a single integrated circuit chip. This radio combines with the MAC/baseband processor 420 to deliver a complete IEEE 802.11 solution. The MAC/baseband processor 420 may be viewed as being a Wi-Fi baseband processor that is operable to support combined wireless LAN baseband processor and MAC functionality.

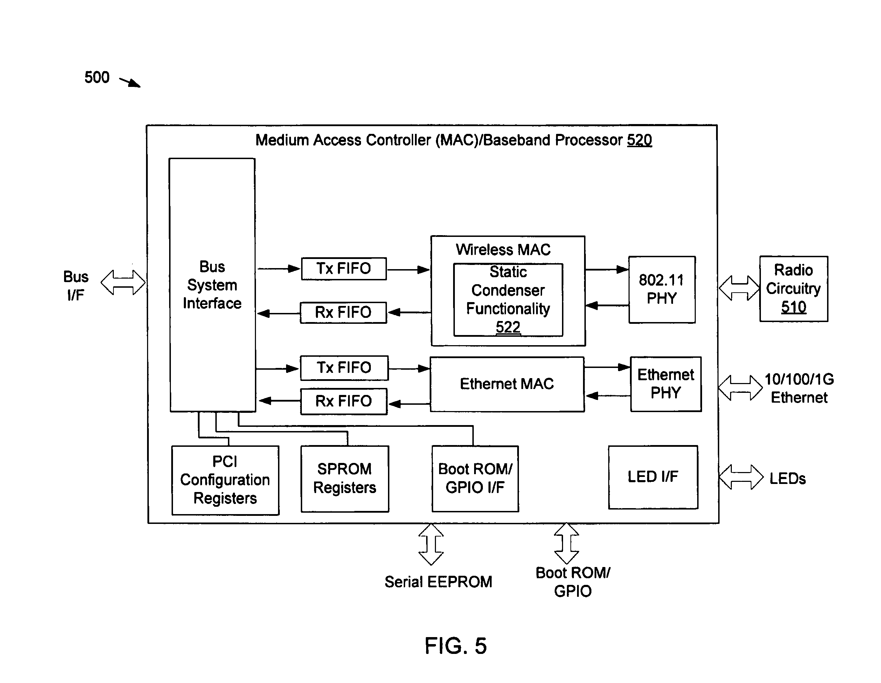

The MAC/baseband processor 420 is operable to support static condenser functionality 422 in aggregating static indications with moving blocks in packets of a video stream according to embodiments of the present disclosure. FIG. 5 shows yet another embodiment of a device that may be implemented to support the functionality in aggregating static indications with moving blocks in packets of a video stream.

Interactive device 500 includes a radio circuitry 510 and a MAC/baseband processor 520; the MAC functionality may be viewed as being designed into the baseband processor. The radio circuitry 510 is operable to receive a wireless signal via an antenna. Similar to the embodiment of the FIG. 4, the antenna may be part of a diversified antenna that includes one or more antennae. The MAC/baseband processor 520 is operable to communicate with other devices via a bus interface.

The MAC/baseband processor 520 integrates the IEEE 802.11 MAC, 10/100/1000 Ethernet MAC, etc. interfaces thereby enabling complete portable Internet communications connectivity. The IEEE 802.11 MAC may be implemented to include the new proposed draft of the IEEE 802.11ad, WiGig Alliance standards with WiGig Display Extension (WDE) support, and the functionality of the disclosure described herein. Specifically, this modified and improved wireless MAC includes static condenser functionality 522 supporting aggregating static indications with moving blocks in packets of a video stream. The functionality 522 will provide improvements for wireless communication of the interactive device 500.

In certain embodiments, the MAC/baseband processor 520 is operable to support IEEE 802.11 MAC and baseband functions and interfaces to the radio circuitry 510 to provide data network connectivity supporting data rates from 1 Mbps to 7 Gbps. In addition, in certain embodiments, the MAC/baseband processor 520 is operable to support Ethernet functionality.

Additional components of the interactive device 500 include bus system interface, Tx FIFO buffers, Rx FIFO buffers, Ethernet MAC, 802.11 PHY, Ethernet PHY, Led interface, PCI configuration registers, SPROM registers, and Boot ROM/GPIO interface, as shown in the figure. The interactive device 500 may also be additionally coupled to bus interface, serial EEPROM, Boot ROM/GPIO, LEDs, Ethernet connection (e.g., 10/100/1000), as shown in the figure.

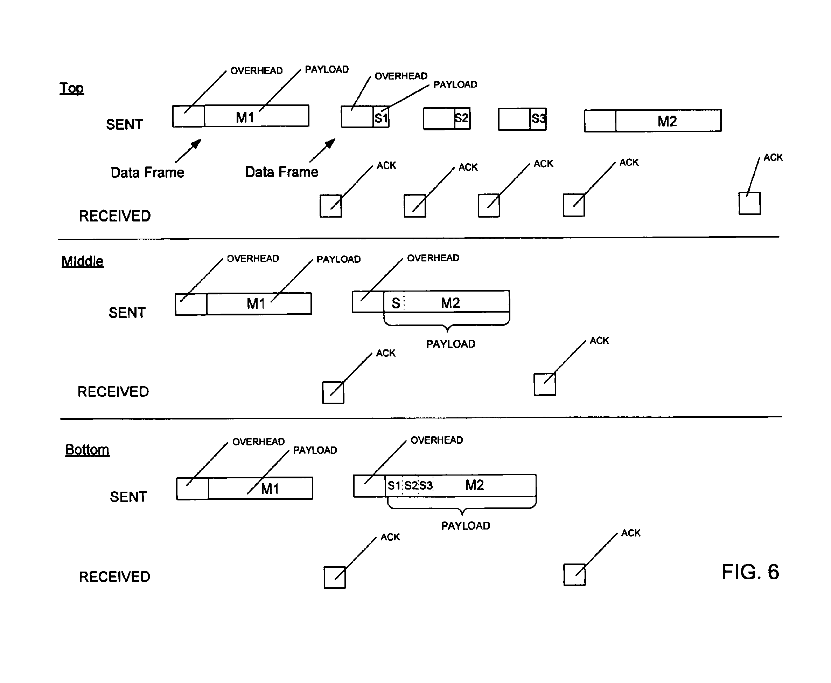

Referring now to FIG. 6, various schemes of transmitting video are depicted. Consider H.264/MPEG-4 Part 10 or AVC (Advanced Video Coding) which is a standard for video compression and is currently one of the most commonly used formats for the recording, compression, and distribution of high definition video. H.264/AVC follows the so-called block-based hybrid video-coding approach.

For the video coding layer for a macroblock, a picture is split into blocks of a fixed size or macroblocks. The first picture of a sequence or a random access point is typically Intra coded without using information other than that contained in the picture itself. Each sample of a block in an Intra frame is predicted using spatially neighboring samples of previously coded blocks.

In an H.264/AVC coded sequence, a video picture is coded as one or more slices, each containing an integral number of macroblocks, where each macroblock (MB) can be coded in one of a large number of modes. These modes include three classes of Intra coding modes and four modes that use Inter prediction. In addition, if a macroblock has motion characteristics that allow its motion to be effectively predicted from the motion of neighboring macroblocks, and it contains no non-zero quantized transform coefficients, then it is flagged as skipped. This mode is identified as the Skip mode and results in no further data being transmitted after the Skip indication.

Accordingly, at the top of FIG. 6, a wireless transmission scheme is shown, where a wireless data frame includes payload and overhead portions, and an acknowledgement (ACK) is returned in confirmation of receipt for each wireless data frame. In particular, the payload for the three middle data frames includes separate static indicators S1, S2, S3 for a video stream (where the first and fourth data frames include macroblocks M1, M2 for moving picture regions). In this example, the payload sizes for the static indicators S1, S2, S3 may be small when compared to the overhead data also being transmitted and the return acknowledgments (ACK).

Referring now to the bottom of FIG. 6, a wireless transmission scheme in accordance with an embodiment of the present disclosure is shown. Similarly, to the previous scheme, a first data frame is shown having a payload of a macroblock M1 for a moving picture region which includes a non-zero motion vector and transformed prediction residual information. In the following data frame that is transmitted, the payload also includes a macroblock M2 for a moving picture region along with a series of static indicators S1, S2, S3 for non-moving macroblocks that preceded the moving picture region. Accordingly, whereas the scheme used at the top of the figure sends separate data frames for each of the static indicators S1, S2, S3, the alternative scheme at the bottom combines the static indicators S1, S2, S3 as part of a payload for the moving region M2. Accordingly, instead of three separate data frames being sent for the separate indicators, one consolidated data frame is transmitted. Correspondingly, one acknowledgment (ACK) is expected to be returned upon receipt of the three static indicators corresponding to three macroblocks of the video stream.

Next at the middle of FIG. 6, a wireless transmission scheme in accordance with another embodiment, among others, of the present disclosure is shown. Similarly, to the above discussion, a first data frame is shown having a payload of a macroblock M1 for a moving picture region which includes a non-zero motion vector and transformed prediction residual information. In the following data frame that is transmitted, the payload also includes a macroblock M2 for a moving picture region along with a static indicator representation S for non-moving macroblocks that preceded the moving picture region. This representation may be devised in various manners, including specifying a number of the preceding macroblocks that are static or specifying a range of blocks that are static in a video frame of the video stream. These are but a few examples and are not meant to be limiting.

Accordingly, whereas the scheme used at the top of the figure sends separate data frames for each of the static indicators S1, S2, S3, the scheme at the middle contains a single static indication S that identifies that the three macroblocks that precede the macroblock for the moving region are static regions. Accordingly, instead of 3 separate data frames being sent for the separate indicators, one consolidated data frame is transmitted. Correspondingly, one acknowledgment (ACK) is expected to be returned upon receipt of the three static indicators for the three macroblocks of the video stream.

Therefore, embodiments of the present disclosure provide for a set of static indications to be aggregated in a wireless packet. This can greatly reduce the overhead of the ACK portion of a MAC (media access control) protocol using in wireless transmissions.

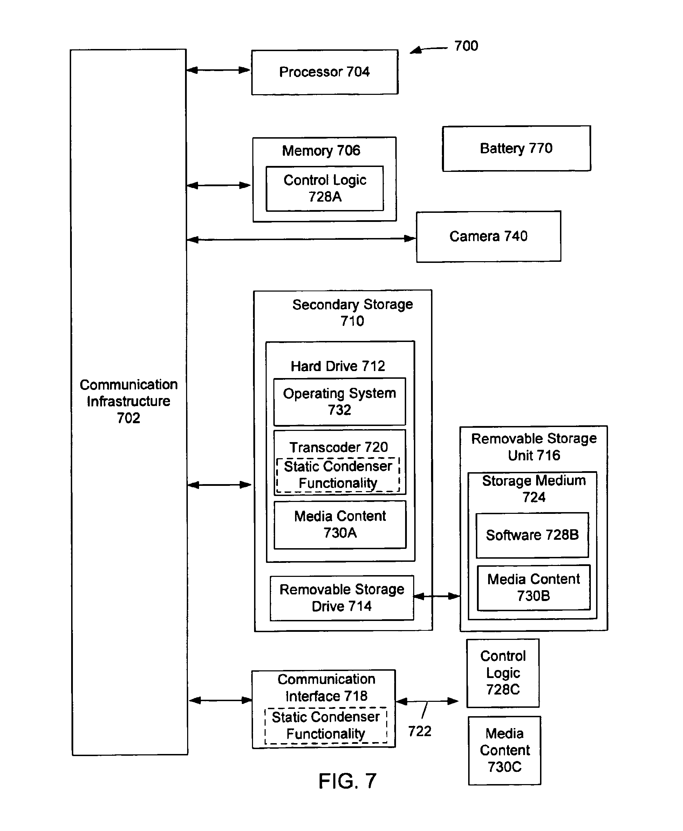

FIG. 7 shows a block diagram of an example electronic device featuring static condenser functionality, according to an embodiment. Electronic device 700 may include one or more of the elements shown in FIG. 7. Additionally, transceivers 391, 392 (FIG. 3) may be embodied by an electronic device 700, in various embodiments.

As shown in the example of FIG. 7, electronic device 700 may include one or more processors (also called central processing units, or CPUs), such as a processor 704. Processor 704 is connected to a communication infrastructure 702, such as a communication bus. In some embodiments, processor 704 can simultaneously operate multiple computing threads. The electronic device 700 and its respective components may be powered by a battery device 770.

Electronic device 700 also includes a primary or main memory 706, such as random access memory (RAM). Main memory 706 has stored therein control logic 728A (computer software), and data.

Electronic device 700 also includes one or more secondary storage devices 710. Secondary storage devices 710 include, for example, a hard disk drive 712 and/or a removable storage device or drive 714, as well as other types of storage devices, such as memory cards and memory sticks. For instance, electronic device 700 may include an industry standard interface, such a universal serial bus (USB) interface for interfacing with devices such as a memory stick. Removable storage drive 714 represents a floppy disk drive, a magnetic tape drive, a compact disk drive, an optical storage device, tape backup, *etc*. As shown in FIG. 7, secondary storage devices 710 may include an operating system 732 and transcoder 720.

Removable storage drive 714 interacts with a removable storage unit 716. Removable storage unit 716 includes a computer useable or readable storage medium 724 having stored therein computer software 728B (control logic) and/or data. Removable storage unit 716 represents a floppy disk, magnetic tape, compact disk, DVD, optical storage disk, or any other computer data storage device. Removable storage drive 714 reads from and/or writes to removable storage unit 716 in a well-known manner.

Electronic device 700 further includes a communication or network interface 718 (e.g., radio circuitry 400, 500). Communication interface 718 enables the electronic device 700 to communicate with remote devices. For example, communication interface 718 allows electronic device 700 to communicate over communication networks or mediums 722 (representing a form of a computer useable or readable medium), such as LANs, WANs, the Internet, *etc*. Network interface 718 may interface with remote sites or networks via wired or wireless connections.

Control logic 728C may be transmitted to and from electronic device 700 via the communication medium 722. Any apparatus or manufacture comprising a computer useable or readable medium having control logic (software) stored therein is referred to herein as a computer program product or program storage device. This includes, but is not limited to, electronic device 700, main memory 706, secondary storage devices 710, and removable storage unit 716. Such computer program products, having control logic stored therein that, when executed by one or more data processing devices, cause such data processing devices to operate as described herein, represent embodiments of the present disclosure.

Electronic device 700 may be implemented in association with a variety of types of display devices. For instance, electronic device 700 may be one of a variety of types of media devices, such as a stand-alone display (*e.g*., a television display such as flat panel display, *etc*.), a computer, a tablet, a smart phone, a game console, a set top box, a digital video recorder (DVR), a networking device (*e.g*., a router, a switch, *etc*.), a server, or other electronic device mentioned elsewhere herein, *etc*. Media content that is delivered in two-dimensional or three-dimensional form according to embodiments described herein may be stored locally or received from remote locations. For instance, such media content may be locally stored for playback (replay TV, DVR), may be stored in removable memory (*e.g*. DVDs, memory sticks, *etc*.), may be received on wireless and/or wired pathways through a network such as a home network, through Internet download streaming, through a cable network, a satellite network, and/or a fiber network, *etc*. For instance, FIG. 7 shows a first media content 730A that is stored in hard disk drive 712, a second media content 730B that is stored in storage medium 724 of removable storage unit 716, and a third media content 730C that may be remotely stored and received over communication medium 722 by communication interface 718. Media content 730 may be stored and/or received in these manners and/or in other ways.

Video-image camera 740 may include an image sensor device and image processor and/or additional/alternative elements. The video-image camera 740 captures video images, and generates corresponding video data that is output on a video data signal. In an embodiment, the video data signal contains the video data that is output on an image processor output signal, including processed pixel data values that correspond to images captured by the image sensor device. The video data signal may include video data captured on a frame-by-frame basis or other basis. In an embodiment, the video data signal may include video data formatted as Bayer pattern data or in another image pattern data type known in the art.

In accordance with one embodiment, the video data signal may be transmitted using the communication interface 718. Accordingly, the communication interface 718 may support static condenser functionality to aggregate static indications with moving blocks in an encoded form of the video data signal in accordance with the present disclosure. Alternatively, in an embodiment, the transcoder 720 may support static condenser functionality to aggregate static indications with moving blocks in an encoded form of the video data signal before the video signal is relayed to the communication interface 718 for wireless or wired transmission. Accordingly, use of the static condenser functionality in accordance with the present disclosure may reduce the power burden on battery 770. Further, control logic 728A may be able to activate a mode in which the static condenser functionality is activated and an alternative mode in which the static condenser functionality is deactivated. Activation or deactivation of these modes may be selected by a user of the electronic device, in one embodiment.

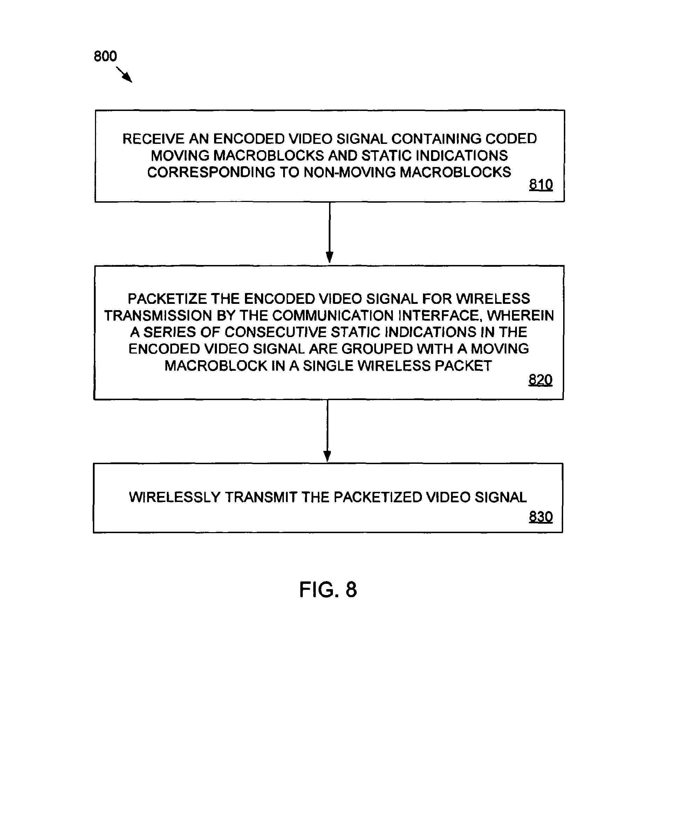

FIG. 8 is a flowchart diagram illustrating an embodiment of a method 800 of processing static indications that is performed according to an embodiment of the present disclosure. To begin, an encoded video signal containing coded moving macroblocks and static indications corresponding to non-moving macroblocks is received (810) by a communication interface 718. The encoded video signal is packetized (820) for wireless transmission by the communication interface 718, wherein a series of consecutive static indications in the encoded video signal are grouped with a moving macroblock in a single wireless packet. The packetized video signal is then wirelessly transmitted (830) by the communication interface 718.

In one embodiment, the series of consecutive static indications are grouped in the single wireless packet as individual static indications. In an alternative embodiment, the series of consecutive static indications are grouped in the single wireless packet as a single static indication that identifies the non-moving macroblocks that were represented by the consecutive static indications in the encoded video signal.

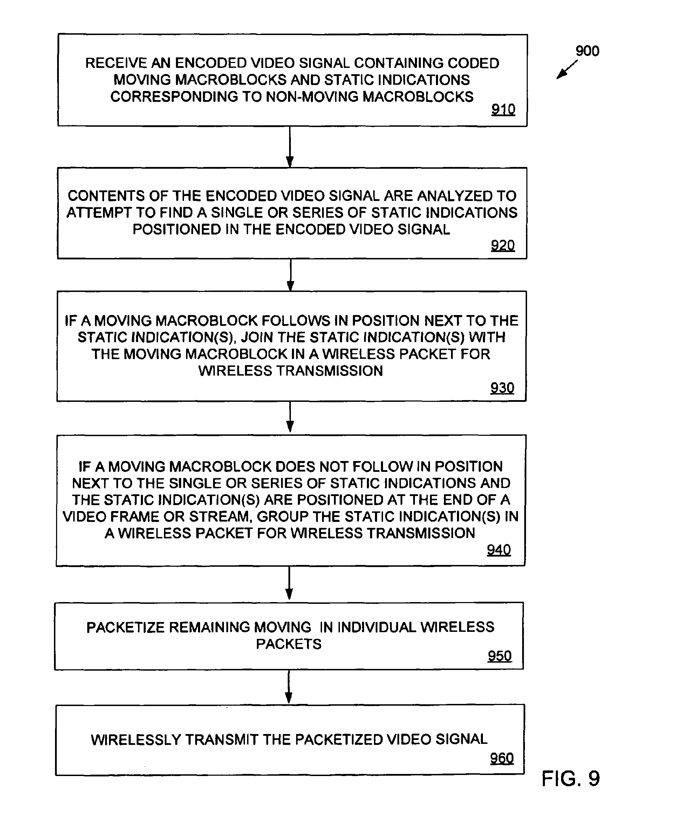

Next, FIG. 9 is a flowchart diagram illustrating another embodiment of a method 900 of processing static indications according to the present disclosure. To begin, an encoded video signal containing coded moving macroblocks and static indications corresponding to non-moving macroblocks is received (910) by a communication interface 718. Contents of the encoded video signal are analyzed (920) to attempt to find a single or series of static indications positioned in the encoded video signal. If a moving macroblock follows in position next to the static indication(s), then the static indication(s) are joined (930) with the moving macroblock in a wireless packet for wireless transmission by the communication interface 718. Alternatively, if a moving macroblock does not follow in position next to the single or series of static indications and the static indication(s) are positioned at the end of a video frame or stream, then the static indication(s) are grouped (940) in a wireless packet for wireless transmission by the communication interface 718. Remaining moving macroblocks are packetized (950) in individual wireless packets. Accordingly, the resulting packetized video signal is wirelessly transmitted (960) by the communication interface 718.

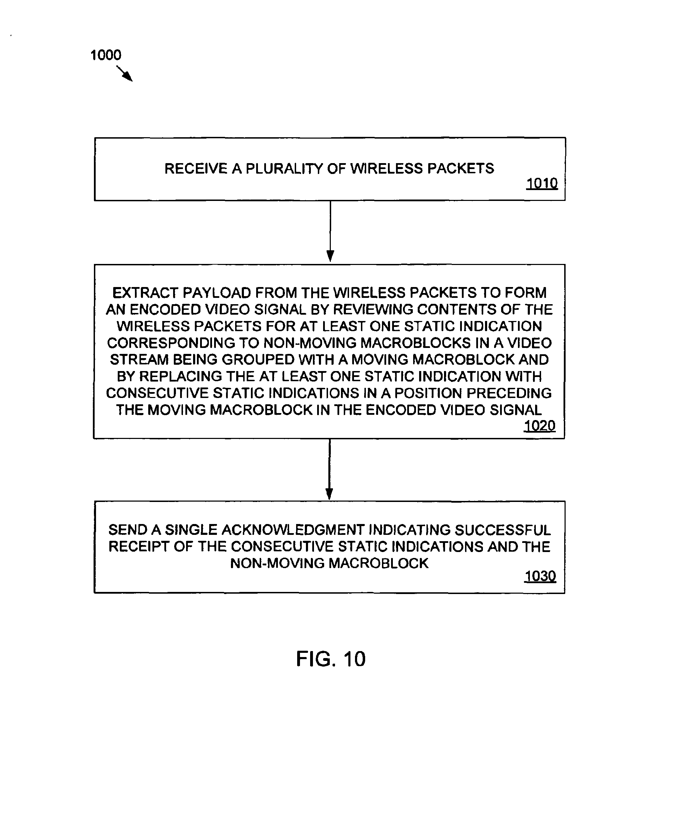

FIG. 10 is a flowchart diagram illustrating a further embodiment of a method 1000 of processing static indications. A plurality of wireless packets are received (1010) by a communication interface 718 and payload is extracted from the wireless packets to form (1020) an encoded video signal, wherein contents of the wireless packets are reviewed for at least one static indication corresponding to non-moving macroblocks in a video stream being grouped with a moving macroblock and wherein the at least one static indication grouped with a moving macroblock is replaced with consecutive static indications in a position preceding the moving macroblock in the encoded video signal. In an embodiment, the contents of the wireless packets are additionally reviewed for at least one static indication at an end position of the video stream and the at least one static indication is replaced with consecutive static indications in the end position when the at least one static indication corresponds to a plurality of non-moving macroblocks. Referring again to FIG. 10, a single acknowledgment indicating successful receipt of the consecutive static indications and the non-moving macroblock is sent (1030) by the communication interface 718.

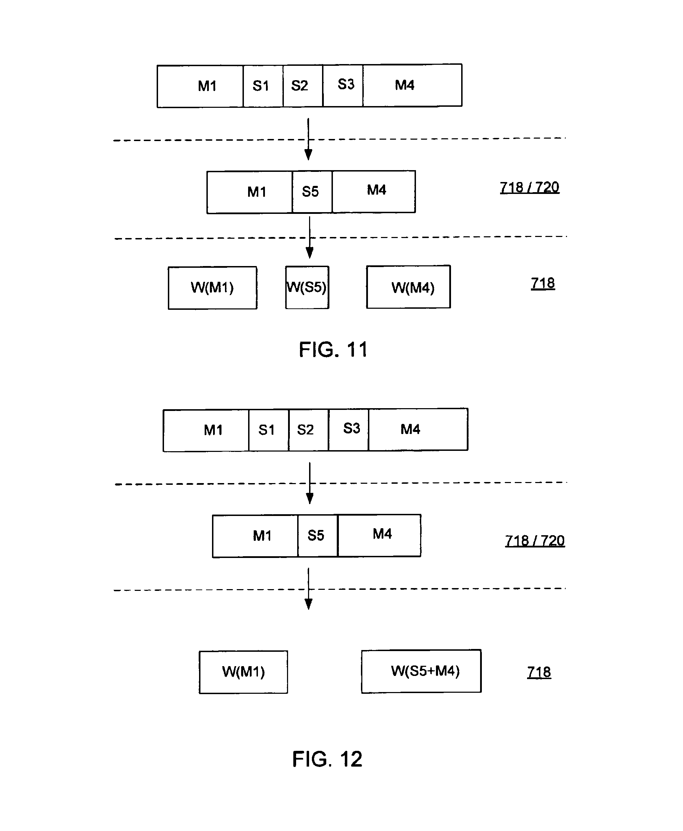

In an alternative embodiment, a transcoder 720 may group or condense the static indications before passing the encoded video signal to the communications interface 718. For example, referring now to FIG. 11, an exemplary scheme for condensing static indications in a video stream is shown. At the top portion, an encoded video stream is shown with a first moving macroblock (M1), a series of static indications (S1, S2, S3) corresponding to non-moving macroblocks, and then a second moving macroblock (M4). At either a communications interface 718 or transcoder 720, the series of static indications are replaced with a single static indication S5. Accordingly, in preparation of wireless transmission of the encoded video stream, the first macroblock is packetized in a first wireless packet W(M1), the single static indication S5 is packetized in its own wireless packet W(S5), and the second non-moving block M4 is included in a wireless packet W(M4). Alternatively, as shown in FIG. 12, an alternative embodiment may join the single static indication with the second non-moving packet M4 in a wireless packet W(S5+M4).

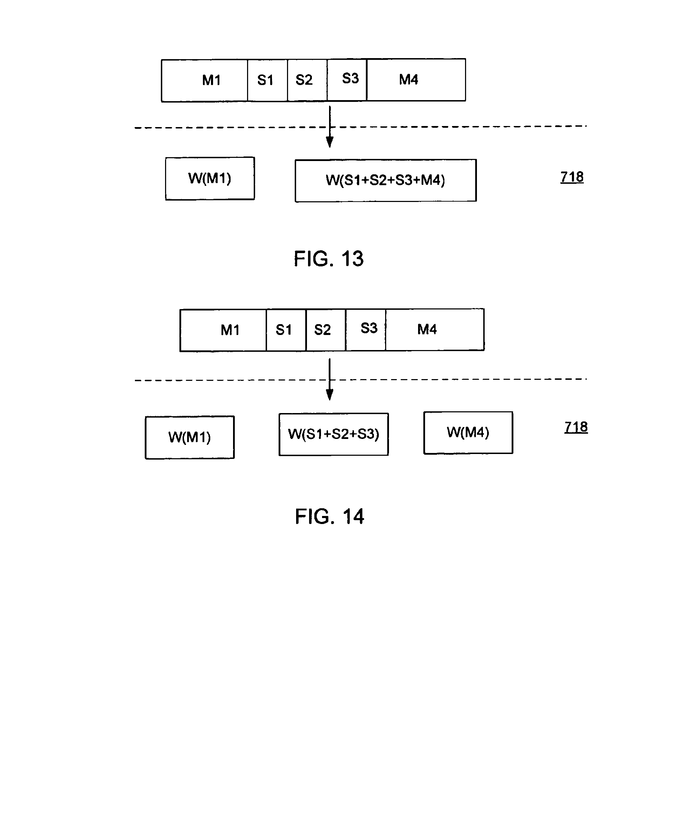

In FIG. 13, a different approach is depicted for one embodiment. Here, an encoded video stream is shown with a first moving macroblock (M1), a series of static indications (S1, S2, S3) corresponding to non-moving macroblocks, and then a second moving macroblock (M4). Accordingly, in preparation of wireless transmission of the encoded video stream, the first macroblock is packetized in a first wireless packet W(M1). Additionally, each of the static indications (S1, S2, S3) is joined with the second non-moving block and packetized in their own wireless packet W(S1 + S2 +S3 + M4). Alternatively, as shown in FIG. 14, an alternative embodiment may group the single static indications (S1, S2, S3) together and include them in their own wireless packet W(S1, S2, S3), with the second non-moving packet M4 being included in a separate wireless packet W(M4). Therefore, embodiments of the present disclosure provide for a set of static indications to be aggregated in a wireless packet which can greatly reduce the overhead of the ACK portion of a MAC (media access control) protocol using in wireless transmissions.

Certain embodiments of the present disclosure, including static condenser functionalities, can be implemented in hardware, software, firmware, or a combination thereof. Some embodiments are implemented in software or firmware that is stored in a memory and that is executed by a suitable instruction execution system. An alternative embodiment can be implemented with any or a combination of the following technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), *etc*.

Any process descriptions or blocks in flow charts should be understood as representing modules, segments, or portions of code which include one or more executable instructions for implementing specific logical functions or steps in the process, and alternate implementations are included within the scope of the present disclosure in which functions may be executed out of order from that shown or discussed, including substantially concurrently or in reverse order, depending on the functionality involved, as would be understood by those reasonably skilled in the art.

A software program corresponding to the static condenser can comprise an ordered listing of executable instructions for implementing logical functions and can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, or transport the program for use by or in connection with the instruction execution system, apparatus, or device. The computer readable medium can be, for example but not limited to, an electronic, magnetic, optical, electromagnetic, infrared, or semiconductor system, apparatus, or device medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). In addition, the scope of the certain embodiments includes embodying the functionality of exemplary embodiments of the present disclosure in logic embodied in hardware or software-configured mediums.

It should be emphasized that the above-described embodiments of the present disclosure are merely possible examples of implementations, merely set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method comprising:
receiving an encoded video signal containing coded moving macroblocks and static indications corresponding to non-moving macroblocks; and
packetizing the encoded video signal for wireless transmission, wherein a series of consecutive static indications in the encoded video signal are grouped with a moving macroblock in a single wireless packet.

2. The method of claim 1, wherein the series of consecutive static indications are grouped in the single wireless packet as individual static indications.

3. The method of claim 1 or 2, wherein the series of consecutive static indications are grouped in the single wireless packet as a single static indication that identifies the non-moving macroblocks that are represented by the consecutive static indications in the encoded video signal.

4. The method of any preceding claim, wherein the wireless transmission occurs in at least a 60 GHz frequency band.

5. The method of any preceding claim, wherein the moving macroblock in the single wireless packet is positioned after the consecutive static indications in the encoded video signal.

6. The method of any preceding claim, wherein, during packetizing, a series of consecutive static indications at an end position of the encoded video signal are grouped without a moving macroblock in a second single wireless packet.

7. A method comprising:
receiving a plurality of wireless packets; and
extracting payload from the wireless packets to form an encoded video signal, wherein contents of the wireless packets are reviewed for at least one static indication corresponding to non-moving macroblocks in a video stream being grouped with a moving macroblock, wherein the at least one static indication grouped with a moving macroblock is replaced with consecutive static indications in a position preceding the moving macroblock in the encoded video signal.

8. A system comprising:
a video transcoder configured to output an encoded video signal containing coded moving macroblocks and static indications corresponding to non-moving macroblocks; and
radio circuitry configured to packetize the encoded video signal for wireless transmission, wherein a series of consecutive static indications in the encoded video signal are grouped with a moving macroblock in a single wireless packet.

9. The system of claim 8, wherein the wireless transmission occurs in at least a 60 GHz frequency band.

10. The system of claim 8 or 9, wherein the series of consecutive static indications are grouped in the single wireless packet as individual static indications.

11. The system of any of claims 8 to 10, wherein the series of consecutive static indications are grouped in the single wireless packet as a single static indication that identifies the non-moving macroblocks that are represented by the consecutive static indications in the encoded video signal.

12. The system of any of claims 8 to 11, the radio circuitry further configured to receive a plurality of wireless packets; and extract a second encoded video signal from the plurality of wireless packets, wherein contents of the plurality of wireless packets are reviewed for at least one static indication, corresponding to non-moving macroblocks in the second encoded video signal, grouped with a moving macroblock.

13. The system of claim 12, wherein the at least one static indication grouped with the moving macroblock is replaced with second consecutive static indications in a position preceding the moving macroblock in the second encoded video signal.

14. The system of claim 13, the radio circuitry further configured to send a single acknowledgment indicating successful receipt of the second consecutive static indications.

15. The system of any of claims 8 to 14, wherein the moving macroblock in the single wireless packet is positioned after the consecutive static indications in the encoded video signal.
